(19) Europäisches Patentamt European Patent Office Office européen des brevets

(11) **EP 3 853 561 B1**

(12) **FASCICULE DE BREVET EUROPEEN**

(45) Date de publication et mention de la délivrance du brevet:
**30.10.2024 Bulletin 2024/44**

(21) Numéro de dépôt: **19794597.5**

(22) Date de dépôt: **16.09.2019**

(51) Classification Internationale des Brevets (IPC):
**G01F 1/42** *(2006.01)*       **F23R 3/28** *(2006.01)*
**F02C 7/22** *(2006.01)*       **F02C 9/26** *(2006.01)*
**F23N 1/00** *(2006.01)*       **F23N 5/18** *(2006.01)*
**G01F 15/00** *(2006.01)*

(52) Classification Coopérative des Brevets (CPC):
**G01F 1/42; F02C 7/222; F02C 9/263; F23N 1/002;
F23R 3/28;** F05D 2270/3015; F05D 2270/306;
F23N 2005/185; F23N 2225/06; F23N 2241/20;
G01F 15/002; G01F 15/003; G01F 15/005

(86) Numéro de dépôt international:
**PCT/FR2019/052146**

(87) Numéro de publication internationale:
**WO 2020/058617 (26.03.2020 Gazette 2020/13)**

(54) **PROCÉDÉ DE DÉTERMINATION DU DÉBIT DE FLUIDE COMBUSTIBLE INJECTE À L'INTÉRIEUR D'UNE CHAMBRE DE COMBUSTION SANS DIAPHRAGME SUPPLEMENTAIRE**

VERFAHREN ZUR BESTIMMUNG DER DURCHFLUSSRATE EINER IN EINES VERBRENNUNGSKAMMER EINGESPRITZTEN FLUIDS OHNE ZUSÄTZLICHE DIAPHRAGMEN

METHOD FOR DETERMINING THE FLOW RATE OF FLUID INJECTED INTO A COMBUSTION CHAMBER WITHOUT ADDITIONAL DIAPHRAGM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.09.2018 FR 1858607
20.12.2018 FR 1873577**

(43) Date de publication de la demande:
**28.07.2021 Bulletin 2021/30**

(73) Titulaire: **General Electric Technology GmbH
5400 Baden (CH)**

(72) Inventeurs:
• **CAGNE, Sébastien
90000 BELFORT (FR)**
• **SOLACOLU, Christian-Anghel
90000 BELFORT (FR)**

(74) Mandataire: **Casalonga
Casalonga & Partners
Bayerstraße 71/73
80335 München (DE)**

(56) Documents cités:
WO-A1-99/67617          DE-T5- 112015 003 905
GB-A- 2 323 157         US-A- 5 316 261
US-A1- 2009 071 119     US-A1- 2013 312 421

EP 3 853 561 B1

**Description**

La présente invention concerne un procédé pour déterminer le débit de fluide combustible injecté à l'intérieur d'une turbine avec une ou plusieurs chambres de combustion d'une turbine, notamment d'une turbine à gaz. L'invention concerne également un procédé de déclenchement d'un tel procédé de détermination.

Une turbine à gaz comprend généralement une section d'admission, un compresseur, une ou plusieurs chambres de combustion, une turbine et une section d'échappement. Chaque chambre de combustion peut comprendre une ou plusieurs injecteurs de fluide combustible.

Un chemin d'écoulement peut être défini à travers la turbine à gaz. En fonctionnement normal, de l'air pénètre dans la turbine à gaz à travers la section d'admission. L'air s'écoule dans le compresseur, pour augmenter sa pression. L'air comprimé circule ensuite à travers vers l'ensemble des chambres à combustion, où se mélange avec le carburant tel que du gaz pour former un mélange combustible air-carburant. Le mélange air-carburant est injecté dans la chambre de combustion pour être brûlé. Cette combustion génère des gaz chauds injectés dans la turbine pour extraire l'énergie provenant des gaz chauds. Ensuite, l'échappement peut être évacué de la turbine à gaz à travers la section d'échappement.

Le système de régulation et de protection pour les turbines à gaz de grande puissance inclut généralement une protection ou limitation lors du démarrage et avant la détection de la combustion ou de flamme. Cette protection consiste à limiter la quantité du combustible gaz non brulé, pendant l'allumage de la chambre de combustion, avant la détection de la flamme, qui rentre dans la turbine et la chaudière de récupération, située en aval.

De manière générale la mesure du débit du fluide combustible est nécessaire pour la régulation de la turbine en fonctionnement normal et aussi avant la détection de la flamme. Le pluspart des sytèmes de mesure de débit installés sont adaptés à la mesure a charge nominale, c'est-à-dire après l'allumage et la synchronisation de l'alternateur au réseau.

Cependant le débit du gaz avant l'allumage est considérablement inférieur par rapport au débit à charge nominale, ainsi un débitmètre pour la charge nominale aura une marge d'erreur relative trop importante pour bien estimer un faible débit comme celui nécessaire pour l'allumage. De plus, l'installation d'un deuxième débitmètre pour mesurer le débit d'allumage imposerait une perte de pression supplémentaire du combustible gaz, indésirable, dans le système de combustible.

Il est connu, notamment du document WO 99/67617 A1 d'utiliser un dispositif de mesure de débit utilisant le principe qu'un fluide s'écoulant au travers d'un orifice de restriction voit sa pression chuter d'une valeur proportionnelle au carré du débit. Si les caractéristiques du fluide et de l'orifice sont parfaitement connues, alors la perte de pression mesurée de part et d'autre de l'orifice permet d'en déduire le débit du fluide. Il s'agit de la mesure de débit par plaque à orifice.

Cette mesure permet d'en déduire directement le débit volumique instantanée. Cette chute de pression localisée au niveau du diaphragme (ou orifice de restriction) n'est pas une perte d'énergie (perte de charge) mais un transfert d'énergie « de pression » en énergie « de vitesse ».

Le document WO9967617 décrit un système de mesure de débit dans un injecteur par la chute de pression à travers d'un orifice variable.

Cette méthode de mesure nécessite l'utilisation d'un diaphragme ou orifice de restriction additionnel disposé dans le passage du fluide combustible injecté. Ceci entraine une perte de pression supplémentaire dans le circuit du fluide combustible. De plus, cette méthode est coûteuse car elle nécessite un organe additionnel dédié à cette mesure de débit.

Il existe également des procédés de détermination du débit de combustible injecté dans la chambre de combustion dans les documents US 2009/071119 A1 et GB 2 323 157 A. Les documents US 5 316 261 A, DE 11 2015 003905 T5 et WO 99/67617 A1 traitent de sujets associés.

Il existe donc un besoin pour une solution de détermination du débit de fluide combustible injecté dans la chambre de combustion qui ne présenterait pas les inconvénients précités. En particulier, il existe un besoin pour une solution de détermination du débit de fluide combustible injecté dans la chambre de combustion moins coûteuse dont l'intégration à la chambre de combustion et sa mise en oeuvre sont facilités.

Le document US20070186557 A1 définie l'aire effective (Ae) comme étant une correction physique qui dépend de la pression, de la vitesse et de la température en amont et en aval des injecteurs. En particulier le dimensionnement de l'aire effective permet de définir la pression en entrée de l'injecteur. Le dimensionnement de cette aire effective permet d'assurer que les rapports de pression dans les injecteurs ne dépassent pas les limites maximales ou minimales admissibles, connue comme ratio de pression critique CPR (1.78) au-delà duquel le débit reste constant.

Pour cela, l'invention propose un procédé de détermination du débit de fluide combustible injecté à l'intérieur d'une chambre de combustion d'une turbine, le fluide combustible étant injecté à l'intérieur de la chambre de combustion au travers d'un orifice d'au moins un injecteur, le procédé comprenant les étapes suivantes :

- déterminer la section de l'orifice dudit au moins un injecteur au travers duquel le fluide combustible est injecté dans la chambre de combustion,
- déterminer la pression du fluide combustible en amont de l'orifice de l'injecteur,
- déterminer la pression en aval de l'orifice de l'injecteur,
- déterminer le débit de fluide combustible s'écoulant au travers de l'orifice dudit au moins un injecteur en fonction de la section de l'orifice dudit au moins un injecteur, de la pression du fluide combustible en amont de l'orifice de l'injecteur et de la pression en aval de l'orifice de l'injecteur déterminés,
- déterminer le débit de fluide combustible injecté à l'intérieur de la chambre de combustion en fonction de la différence de pression au travers dudit au moins un injecteur.

Selon un mode de réalisation du procédé de détermination, le débit de fluide combustible injecté à l'intérieur de la chambre de combustion est déterminé comme étant la somme des débits de fluide combustible s'écoulant au travers de la pluralité des injecteurs.

Selon un mode de réalisation du procédé de détermination, la pression du fluide combustible en aval de l'orifice de l'injecteur est la pression à l'intérieur de la chambre de combustion.

Selon l'invention, le fluide combustible est un mélange de gaz air-carburant.

Selon l'invention, la pression du fluide combustible en amont de l'orifice de l'injecteur est déterminée indirectement en mesurant la différence de pression et la pression de l'air comprimé sortant du compresseur.

Selon un mode de réalisation du procédé de détermination, la détermination du débit de fluide combustible injecté à l'intérieur de la chambre de combustion est réalisée avant l'allumage de la chambre de combustion

Selon un mode de réalisation du procédé de détermination, la détermination du débit de fluide combustible est réalisée lorsque la pression en amont d'un espace où débouche ledit au moins un injecteur est strictement supérieure à la pression au niveau dudit espace.

Selon un mode de réalisation du procédé de détermination, la turbine comprenant une pluralité de chambre de combustion comprenant chacune au moins un injecteur de fluide combustible, la détermination du débit de fluide combustible injecté à l'intérieur de chacune des chambres de combustion étant réalisée jusqu'à l'allumage de toutes les chambres de combustion.

Selon un mode de réalisation du procédé de détermination, la turbine comprenant au moins un circuit d'alimentation en combustible de ladite au moins une chambre de combustion, ledit au moins un circuit d'alimentation en combustible étant relié à au moins un dispositif de distribution permettant d'alimenter ledit au moins un injecteur, dans lequel la détermination du débit de fluide combustible injecté à l'intérieur de la chambre de combustion est réalisée en fonction de la pression mesurée au niveau d'un seul dispositif de distribution.

L'invention concerne également un procédé de déclenchement de la détermination d'un débit de fluide combustible injecté à l'intérieur d'une chambre de combustion, le fluide combustible étant injecté à l'intérieur de la chambre de combustion au travers d'un orifice d'au moins un injecteur, le procédé comprenant les étapes suivantes :

- déterminer la différence entre la pression du fluide combustible en amont de l'orifice de l'injecteur et de la pression du fluide combustible en aval de l'orifice de l'injecteur,
- si la pression du fluide combustible en amont de l'orifice de l'injecteur est supérieure à la pression en aval de l'orifice de l'injecteur, mettre en oeuvre le procédé de détermination tel que décrit ci-avant.

**Brève description des dessins**

Les dessins annexés illustrent l'invention :

[Fig. 1] représente schématiquement une vue en coupe partielle d'une turbine à gaz.

[Fig. 2] représente un diagramme de fonctionnement de la turbine à gaz de la figure 1.

**Description de mode(s) de réalisation**

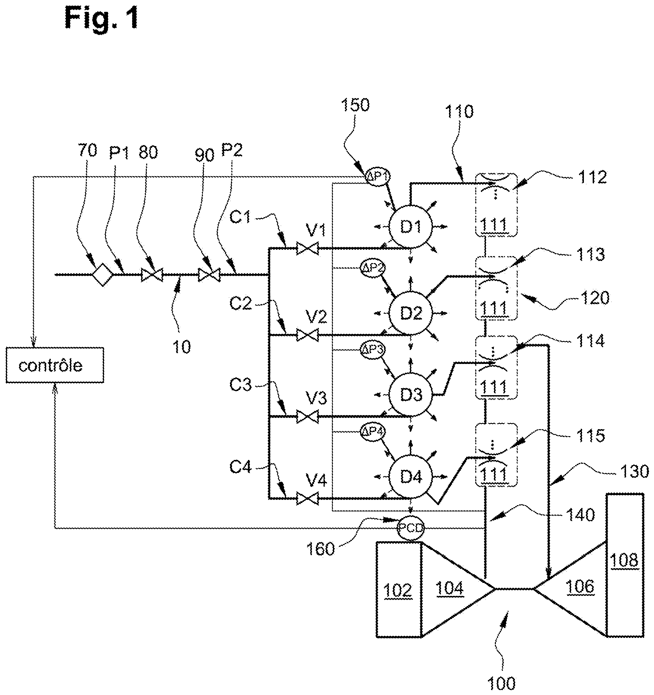

En référence à la figure 1, le système auxiliaire d'alimentation en combustible 10, pour une turbine à gaz 100, est relié à une source de combustible à une pression P1. Le système auxiliaire 10 peut comprendre un filtre 70, une vanne d'arrêt 80 et une vanne de régulation de pression 90, en aval de laquelle est maintenu une pression P2.

Tel qu'indiqué ci-avant, la turbine à gaz 100 comprend une section d'admission 102, un compresseur 104, une ou plusieurs chambres de combustion 120, une turbine 106 et une section d'échappement 108. Chaque chambre de combustion 120 peut comprendre un ou plusieurs types d'injecteurs 112, 113, 114, 115.

Un chemin d'écoulement peut être défini à travers la turbine à gaz 100. En fonctionnement normal, de l'air pénètre dans la turbine à gaz 100 à travers la section d'admission 102. L'air s'écoule dans le compresseur 104, ce qui comprime l'air pour former de l'air comprimé. L'air comprimé rentre par 140 dans l'ensemble de chambre à combustion, pour se mélanger avec le carburant tel que du gaz, pour former un mélange combustible air-carburant au niveau de l'espace 111. Un ou plusieurs des injecteurs 112, 113, 114, 115 débouchent dans cet espace 111

Le mélange air-carburant brulé dans la chambre à combustion 120 génère un flux de gaz chauds passant par une conduite 130 vers la section turbine 106 où l'énergie cinétique des gaz chauds est transformée en énergie mécanique, avant d'être évacué par la section d'échappement 108.

Le niveau de compression nécessaire avant d'entrer dans la chambre à combustion est généralement exprimé en termes de rapports de pression par rapport à la pression de refoulement du compresseur (PCD) mesuré par le capteur de pression 160. Ce rapport de pression est de manière générale compris entre 1,1 * PCD et 1,5 * PCD. Pour cela, un capteur de pression 150 sert à surveiller constamment la différence de pression entre la ligne de combustible et la pression PCD en sortie du compresseur 104.

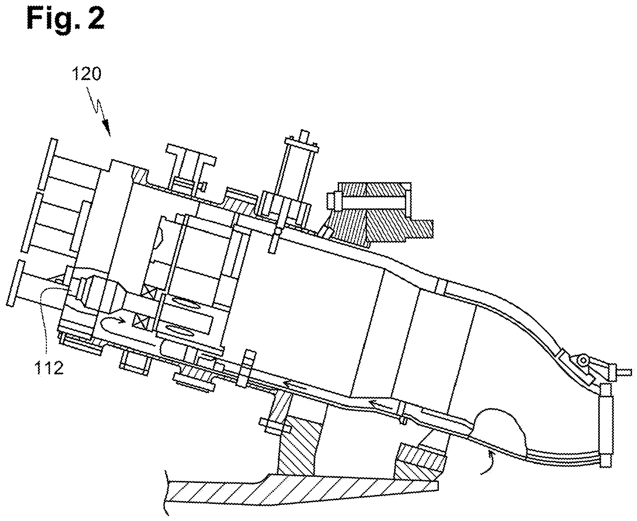

Les systèmes de combustion peuvent comprendre au moins une chambre à combustion 120 avec au moins un type d'injecteur chacun avec un débit spécifique. La distribution homogène de combustible dans chaque type d'injecteur est de préférence obtenue via un circuit de distribution dédié. Dans la figure 1, il est représenté un système de distribution de combustible pour au moins une chambre à combustion 120, chacune munie d'au moins un type d'injecteur, par exemple quatre, mais un seul de chaque type 112, 113, 114, 115 a été représenté par chambre. Chaque type d'injecteur est alimenté par quatre circuits d'alimentation en combustible C1, C2, C3, C4 chacun relié à un dispositif de distribution D1, D2, D3, D4 permettant d'alimenter les injecteurs 112, 113, 114, 115 respectivement. Chaque circuit de distribution peut avoir des caractéristiques particulières en termes de débit. De plus les injecteurs 112, 113, 114, 115 peuvent être agencées dans une même chambre à combustion 120, par exemple dans une configuration circulaire autour d'un axe longitudinal de la chambre de combustion 120, tel que représenté sur la figure 2. Ainsi le nombre total des injecteurs dans le système de combustion est le nombre de type d'injecteurs par chambre fois le nombre de chambres. Le débit total entrant dans la combustion peut être ainsi déduit de manière simplifiée en estimant le débit à travers au moins un injecteur de chaque type 112, 113, 114, 115 puis en multipliant par le nombre de chambres à combustion 120. Bien entendu une mesure unique sur un dispositif de distribution est possible dans le cas d'une mesure partielle de débit, ou pour le besoin de tests du système de combustion.

Le procédé est ci-après décrit en association avec une turbine telle que la turbine à gaz 100 représentée en figures 1 et 2. De manière alternative, le procédé de détermination peut être mis en oeuvre dans toute turbine comprenant au moins une chambre de combustion munie d'au moins un injecteur pour injecter un fluide combustible à l'intérieur de la chambre de combustion et lorsque en fonctionnement normal, la pression en amont du réseau d'injecteurs de chaque chambre à combustion peut dépasser une pression en aval.

La méthode utilise le principe de mesure de débit dans un orifice, pour cela elle considère les caractéristiques d'au moins chaque type d'injecteur 112, 113, 114, 115 utilisés dans les combustion 120 telles que les l'aire effective (Ae) et les pressions en amont et en aval de chaque injecteur.

Ainsi la pression en aval et en amont, ainsi que leur ratio permettent d'estimer un débit massique dans chaque type d'injecteur puis déterminer le débit total de fluide combustible injecté dans l'ensemble de chambres de combustion 120. En d'autres termes, le débit de fluide combustible injecté à l'intérieur des chambres à combustion 120 est déterminé comme étant la somme des débits estimés de combustible s'écoulant au travers chaque type d'injecteurs 112, 113, 114, 115 et en multiplient par le nombre de chambres 120.

Le procédé considère l'utilisation de l'aire effective d'au moins chaque type d'injecteur 112, 113, 114, 115 dans la chambre de combustion 120. Chaque injecteur se caractérise pour avoir une aire effective pour le passage du fluide combustible entre le couvercle 110 et après l'injecteur en 111 dont les dimensions sont connues selon le mode de fonctionnement. L'aire effective de passage peut être assimilée à un orifice. Ainsi la pression au niveau du couvercle en 110 peut être calculée pour chacun des points de conception basés sur : les débits massiques, la pression à l'intérieur de la chambre de combustion en 111 et les propriétés du gaz combustible.

De plus, est connu de l'homme de métier une équation mettant en relation le débit massique d'un circuit, le rapport de pression de l'injecteur, les propriétés du carburant, la pression dans chambre de combustion (PCC) et l'air effective.

Ainsi si l'aire effective de chaque type d'injecteur 112, 113, 114, 115 et la pression en amont en 110 et en aval en 111 sont connues, alors le débit massique par chaque type d'injecteur peut être calculé.

Aux fins de la présente description, le terme "pression amont" est définie comme étant une pression statique du combustible dans un point 110 situé en amont ou à l'entrée de l'une quelconque des injecteurs 112, 113, 114, 115. Pour estimer la pression combustible gaz (Pc) en amont des injecteurs en 110 il est possible d'utiliser la pression de refoulement de l'air du compresseur, ou PCD mesuré en 160, et une mesure de pression différentielle 150 entre la ligne de combustible et la pression de refoulement du compresseur PCD, pour cela nous pouvons utiliser la formule suivante :

## Pc=PCD + ΔP (ligne combustible et PCD)

La pression en aval des injecteurs ou à l'intérieur de la chambre à combustion en 111 est la pression du mélange air/gaz dans la chambre. Cette pression ne peut pas être mesurée directement, mais nous pouvons mesurer une pression relativement proche qui est le PCD 160. En effet, la pression dans la chambre à combustion (Pcc) est équivalente à la pression de décharge de compresseur (CPD) moins la perte de charge de l'air comprimé sortant du compresseur à travers la chambre à combustion (qui est connue ou estimée comme un pourcentage).

Ainsi si les aires effectives de l'injecteur et les pressions amont en 110 et aval en 111 sont connues alors le débit massique par type d'injecteur 112, 113, 114, 115 peut aussi être calculé.

Dès lors, le débit de fluide combustible injecté à l'intérieur de la chambre de combustion peut être déterminé en fonction du débit de fluide combustible s'écoulant au travers de l'orifice dudit au moins un injecteur. Cet orifice est disposé à l'intérieur de la chambre de combustion tel que représenté en figure 1. Chaque orifice de la pluralité d'injecteurs 112, 113, 114, 115 est disposé à l'intérieur de la chambre de combustion correspondante. Cette détermination ne nécessite donc pas l'ajout d'un orifice de restriction ou diaphragme additionnel pour la mesure du débit. Le procédé de détermination est ainsi simplifié et moins coûteux. De plus, l'absence de diaphragme ou orifice de restriction additionnel permet d'éviter la création d'une perte de pression supplémentaire dans le circuit du fluide combustible.

De manière préférentielle, la détermination du débit de fluide combustible injecté à l'intérieur de la chambre de combustion 120 est réalisée lorsque la pression du fluide combustible P2 en amont de l'orifice de l'injecteur 112, 113, 114, 115 est supérieure à la pression en aval jusqu'à l'espace 111 et avant l'allumage de la chambre de combustion. En effet, cette détermination permet de déterminer la quantité du combustible gaz non brulé injecté pendant l'allumage de la chambre de combustion 120, avant la détection de la flamme, qui rentre dans la turbine 100 et la chaudière de récupération située en aval. Ceci permet de réguler et donc de protéger la turbine à gaz.

Pour permettre une protection améliorée, la détermination du débit de fluide combustible injecté à l'intérieur de chacune des chambres de combustion 120 est réalisée jusqu'à l'allumage de toutes les chambres de combustion.

Le procédé correspond à une méthode de mesure indirecte de débit du combustible qui est adaptée à une mesure de débit avant l'allumage. La méthode est particulièrement simple de mettre en oeuvre car n'utilise pas de diaphragme supplémentaire pour estimer le débit et ne produit pas de perte de charge supplémentaire. De plus la mesure de débit au plus près de l'injection dans la chambre de combustion permet d'avoir une valeur la plus juste possible (mise à part les erreurs de mesure) contrairement à la mesure de débitmètre souvent faite en amont sur la ligne d'alimentation en combustible. En effet, la ligne d'alimentation peut avoir de nombreuses fuites entre ce débitmètre et les chambres à combustion, tel est le cas des évents gaz, ce qui peut fausser la mesure. Ainsi, une mesure par débitmètre en amont de la ligne, par un évent qui fuit trop, provoquera une perte d'opérabilité de la machine.

### Revendications

1. Procédé de détermination du débit de fluide combustible injecté à l'intérieur d'une chambre de combustion (120) d'une turbine (100), le fluide combustible étant un mélange de gaz air-carburant injecté à l'intérieur de la chambre de combustion au travers d'un orifice d'au moins un injecteur (112, 113, 114, 115), ledit orifice étant disposé à l'intérieur de la chambre de combustion, le procédé comprenant les étapes suivantes :

   - déterminer la section de l'orifice dudit au moins un injecteur (112, 113, 114, 115) au travers duquel le fluide combustible est injecté dans la chambre de combustion (120),
   - déterminer la pression du fluide combustible en amont de l'orifice de l'injecteur (112, 113, 114, 115),
   - déterminer la pression en aval de l'orifice de l'injecteur (112, 113, 114, 115),
   - déterminer le débit de fluide combustible s'écoulant au travers de l'orifice dudit au moins un injecteur (112, 113, 114, 115) en fonction de la section de l'orifice dudit au moins un injecteur, de la pression du fluide combustible en amont de l'orifice de l'injecteur et de la pression en aval de l'orifice de l'injecteur déterminés,
   - déterminer le débit de fluide combustible injecté à l'intérieur de la chambre de combustion (120) en fonction de la différence de pression au travers dudit au moins un injecteur (112, 113, 114, 115)

   dans lequel la pression du fluide combustible en amont de l'orifice de l'injecteur (112, 113, 114, 115) est déterminée indirectement en mesurant la différence de pression entre la ligne de combustible et la pression de l'air comprimé sortant du compresseur (PCD).

2. Procédé de détermination selon la revendication 1, la chambre de combustion (120) comprenant une pluralité d'injecteurs (112, 113, 114, 115), dans lequel le débit de fluide combustible injecté à l'intérieur de la chambre de combustion (120) est déterminé comme étant la somme des débits de fluide combustible s'écoulant au travers de la pluralité des injecteurs (112, 113, 114, 115).

3. Procédé de détermination selon la revendication 1 ou 2, dans lequel la pression du fluide combustible en aval de l'orifice de l'injecteur (112, 113, 114, 115) est la pression à l'intérieur de la chambre de combustion (120).

4. Procédé de détermination selon l'une quelconque des revendications précédentes, dans lequel la détermination du débit de fluide combustible injecté à l'intérieur de la chambre de combustion (120) est réalisée avant l'allumage de la chambre de combustion (120).

5. Procédé de détermination selon l'une quelconque des revendications précédentes, dans lequel la détermination du débit de fluide combustible est réalisée lorsque la pression (P2) en amont d'un espace (111) où débouche ledit au moins un injecteur (112, 113, 114, 115) est strictement supérieure à la pression au niveau dudit espace (111).

6. Procédé de détermination selon l'une quelconque des revendications précédentes, la turbine (100) comprenant une pluralité de chambre de combustion (120) comprenant chacune au moins un injecteur (112, 113, 114, 115) de fluide combustible, la détermination du débit de fluide combustible injecté à l'intérieur de chacune des chambres de combustion (120) étant réalisée jusqu'à l'allumage de toutes les chambres de combustion.

7. Procédé de détermination selon l'une quelconque des revendications précédentes, la turbine comprenant au moins un circuit d'alimentation en combustible (C1, C2, C3, C4) de ladite au moins une chambre de combustion (120), ledit au moins un circuit d'alimentation en combustible (C1, C2, C3, C4) étant relié à au moins un dispositif de distribution (D1, D2, D3, D4) permettant d'alimenter ledit au moins un injecteur (112, 113, 114, 115), dans lequel la détermination du débit de fluide combustible injecté à l'intérieur de la chambre de combustion est réalisée en fonction de la pression mesurée au niveau d'un seul dispositif de distribution.

8. Procédé de déclenchement de la détermination d'un débit de fluide combustible injecté à l'intérieur d'une chambre de combustion (120), le fluide combustible étant injecté à l'intérieur de la chambre de combustion au travers d'un orifice d'au moins un injecteur (112, 113, 114, 115), le procédé comprenant les étapes suivantes :

- déterminer la différence entre la pression du fluide combustible en amont de l'orifice de l'injecteur (112, 113, 114, 115) et de la pression du fluide combustible en aval de l'orifice de l'injecteur (112, 113, 114, 115),
- si la pression du fluide combustible en amont de l'orifice de l'injecteur (112, 113, 114, 115) est supérieure à la pression en aval de l'orifice de l'injecteur (112, 113, 114, 115), mettre en oeuvre le procédé de détermination selon l'une quelconque des revendications 1 à 6.

**Patentansprüche**

1. Verfahren zum Bestimmen der Durchflussrate eines in das Innere einer Brennkammer (120) einer Turbine (100) eingespritzten brennbaren Fluids, wobei das brennbare Fluid ein Luft-Kraftstoff-Gasgemisch ist, das durch eine Öffnung mindestens einer Einspritzdüse (112, 113, 114, 115) in das Innere der Brennkammer eingespritzt wird, wobei die Öffnung im Inneren der Brennkammer angeordnet ist, wobei das Verfahren die folgenden Schritte umfasst:

- Bestimmen des Querschnitts der Öffnung der mindestens einen Einspritzdüse (112, 113, 114, 115), durch die das brennbare Fluid in die Brennkammer (120) eingespritzt wird,
- Bestimmen des Drucks des brennbaren Fluids vor der Öffnung der Einspritzdüse (112, 113, 114, 115),
- Bestimmen des Drucks nach der Öffnung der Einspritzdüse (112, 113, 114, 115),
- Bestimmen der Durchflussrate des brennbaren Fluids, das durch die Öffnung der mindestens einen Einspritzdüse (112, 113, 114, 115) fließt, in Abhängigkeit von dem bestimmten Querschnitt der Öffnung der mindestens einen Einspritzdüse, dem bestimmten Druck des brennbaren Fluids vor der Öffnung der Einspritzdüse und dem bestimmten Druck nach der Öffnung der Einspritzdüse,
- Bestimmen der Durchflussrate des in das Innere der Brennkammer (120) eingespritzten brennbaren Fluids in Abhängigkeit von der Druckdifferenz über der mindestens einen Einspritzdüse,

wobei der Druck des brennbaren Fluids vor der Öffnung der Einspritzdüse (112, 113, 114, 115) indirekt durch Messen der Druckdifferenz zwischen der Leitung des Brennstoffs und dem Druck der den Kompressor verlassenden Druckluft (PCD) bestimmt wird.

**2.** Bestimmungsverfahren nach Anspruch 1, wobei die Brennkammer (120) eine Vielzahl von Einspritzdüsen (112, 113, 114, 115) umfasst, wobei die Durchflussrate des in das Innere der Brennkammer (120) eingespritzten brennbaren Fluids als Summe der Durchflussraten des durch die Vielzahl von Einspritzdüsen (112, 113, 114, 115) fließenden brennbaren Fluids bestimmt wird.

**3.** Bestimmungsverfahren nach Anspruch 1 oder 2, wobei der Druck des brennbaren Fluids nach der Öffnung der Einspritzdüse (112, 113, 114, 115) der Druck im Inneren der Brennkammer (120) ist.

**4.** Bestimmungsverfahren nach einem der vorhergehenden Ansprüche, wobei das Bestimmen des in das Innere der Brennkammer (120) eingespritzten brennbaren Fluids vor der Zündung in der Brennkammer (120) durchgeführt wird.

**5.** Bestimmungsverfahren nach einem der vorhergehenden Ansprüche, wobei das Bestimmen der Durchflussrate des brennbaren Fluids durchgeführt wird, wenn der Druck (P2) vor einem Raum (111), in den die mindestens eine Einspritzdüse (112, 113, 114, 115) mündet, strikt höher ist als der Druck auf der Ebene des Raums (111).

**6.** Bestimmungsverfahren nach einem der vorhergehenden Ansprüche, wobei die Turbine (100) eine Vielzahl von Brennkammern (120) umfasst, von denen jede mindestens eine Einspritzdüse (112, 113, 114, 115) für brennbares Fluid umfasst, wobei das Bestimmen der Durchflussrate des in das Innere jeder der Brennkammern (120) eingespritzten brennbaren Fluids bis zur Zündung in allen Brennkammern durchgeführt wird.

**7.** Bestimmungsverfahren nach einem der vorhergehenden Ansprüche, wobei die Turbine mindestens einen Kraftstoff-Versorgungskreislauf (C1, C2, C3, C4) für die mindestens eine Brennkammer (120) umfasst, wobei der mindestens eine Kraftstoff-Versorgungskreislauf (C1, C2, C3, C4) mit mindestens einer Verteilungsvorrichtung (D1, D2, D3, D4) verbunden ist, die es ermöglicht, die mindestens eine Einspritzdüse (112, 113, 114, 115) zu versorgen, wobei das Bestimmen der Durchflussrate des in das Innere der Brennkammer eingespritzten brennbaren Fluids in Abhängigkeit von dem an einer einzelnen Verteilungsvorrichtung gemessenen Druck durchgeführt wird.

**8.** Verfahren zum Auslösen des Bestimmens einer Durchflussrate eines in das Innere einer Brennkammer (120) eingespritzten brennbaren Fluids, wobei das brennbare Fluid durch eine Öffnung mindestens einer Einspritzdüse (112, 113, 114, 115) in das Innere der Brennkammer eingespritzt wird, wobei das Verfahren die folgenden Schritte umfasst:

- Bestimmen der Differenz zwischen dem Druck des brennbaren Fluids vor der Öffnung der Einspritzdüse (112, 113, 114, 115) und dem Druck des brennbaren Fluids nach der Öffnung der Einspritzdüse (112, 113, 114, 115),
- wenn der Druck des brennbaren Fluids vor der Öffnung der Einspritzdüse (112, 113, 114, 115) höher ist als der Druck nach der Öffnung der Einspritzdüse (112, 113, 114, 115), Durchführen des Bestimmungsverfahrens nach einem der Ansprüche 1 bis 6.

**Claims**

**1.** A method for determining the flow rate of combustible fluid injected inside a combustion chamber (120) of a turbine (100), the combustible fluid being a mixture of air-fuel gas injected inside the combustion chamber through an orifice of at least one injector (112, 113, 114, 115), said orifice being disposed inside the combustion chamber, the method comprising the following steps:

- determine the section of the orifice of said at least one injector (112, 113, 114, 115) through which the combustible fluid is injected into the combustion chamber (120) ,
- determine the pressure of the combustible fluid upstream of the injector orifice (112, 113, 114, 115),
- determine the pressure downstream of the injector orifice (112, 113, 114, 115),
- determine the flow rate of combustible fluid flowing through the orifice of said at least one injector (112, 113, 114, 115) according to the section of the orifice of said at least one injector, of the pressure of the combustible fluid upstream of the injector orifice and the pressure downstream of the injector orifice determined,
- determine the flow rate of combustible fluid injected inside the combustion chamber (120) according to the pressure difference across said at least one injector (112, 113, 114, 115)

wherein the pressure of the combustible fluid upstream of the injector orifice (112, 113, 114, 115) is determined indirectly by measuring the pressure difference between the fuel line and the pressure of the compressed air leaving the compressor (PCD).

**2.** The determination method according to claim 1, the combustion chamber (120) comprising a plurality of injectors (112, 113, 114, 115), wherein the flow rate of combustible fluid injected inside the combustion chamber (120) is determined to be the sum of the flow rates of the combustible fluid flowing through the plurality of injectors (112, 113, 114, 115).

**3.** The determination method according to claim 1 or 2, wherein the pressure of the combustible fluid downstream of the orifice of the injector (112, 113, 114, 115) is the pressure inside the combustion chamber (120).

**4.** The determination method according to any one of the preceding claims, wherein the determination of the flow rate of combustible fluid injected inside the combustion chamber (120) is carried out before ignition of the combustion chamber (120).

**5.** The determination method according to any one of the preceding claims, wherein the determination of the flow rate of combustible fluid is carried out when the pressure (P2) upstream of a space (111) into which said at least one injector (112, 113, 114, 115) opens is strictly greater than the pressure at said space (111).

**6.** The determination method according to any one of the preceding claims, the turbine (100) comprising a plurality of combustion chambers (120) each comprising at least one injector (112, 113, 114, 115) of combustible fluid, the determination of the flow rate of combustible fluid injected inside each of the combustion chambers (120) being carried out until all the combustion chambers are ignited.

**7.** The determination method according to any one of the preceding claims, the turbine comprising at least one fuel supply circuit (C1, C2, C3, C4) of said at least one combustion chamber (120), said at least one fuel supply circuit (C1, C2, C3, C4) being connected to at least one distribution device (D1, D2, D3, D4) allowing to supply said at least one injector (112, 113, 114, 115), wherein the determination of the flow rate of combustible fluid injected inside the combustion chamber is carried out according to the pressure measured at a single distribution device.

**8.** A method for triggering the determination of a flow rate of combustible fluid injected inside a combustion chamber (120), the combustible fluid being injected inside the combustion chamber through an orifice of at least one injector (112, 113, 114, 115), the method comprising the following steps:

- determine the difference between the pressure of the combustible fluid upstream of the injector orifice (112, 113, 114, 115) and the pressure of the combustible fluid downstream of the injector orifice (112, 113, 114, 115),
- if the pressure of the combustible fluid upstream of the injector orifice (112, 113, 114, 115) is greater than the pressure downstream of the injector orifice (112, 113, 114, 115), implement the determination method according to any one of claims 1 to 6.

# Fig. 1

# Fig. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9967617 A1
- WO 9967617 A
- US 2009071119 A1
- GB 2323157 A
- US 5316261 A
- DE 112015003905 T5
- US 20070186557 A1